# EUROPEAN PATENT APPLICATION

(11) **EP 1 041 735 A2**
(43) Date of publication of application: **04.10.2000**
(21) Application number: 00302541.8
(22) Date of filing: 28.03.2000
(51) Int. Cl.: H04B 7/04

(54) **Diversity device and diversity antenna**

(30) Priority: 31.03.1999 JP 9396299
(71) Applicant: HARADA INDUSTRY CO., LTD., Shinagawa-ku Tokyo (JP)
(72) Inventor: Ogawa, Noboru, Machida-shi, Tokyo (JP)
(74) Representative: Butcher, Ian James

(57) **Abstract**

The diversity device, in which transmitting and receiving carriers of at least two channels are possible, has a diversity antenna (21) having a first antenna (212a) which can be transmitted and received with at least first and second channels, a second antenna (212b) which can be transmitted and received with at least third and fourth channels, and at least two receive only third antennas, a diver unit (22) which converts a carrier received with the diversity antenna into a predetermined reception signal, and a converter (23) which converts the carrier for transmitting and receiving of the first and the second antennas into a carrier of a channel which can be mutually used with another antenna.

## Description

The present invention relates to a radio repeater device, especially, to a radio repeater device of the digital-multiplexed carrier, and a diversity device and a radio repeater device with a diversity antenna.

There is a radio repeater device of a channel select type as a radio repeater device. Since the analogue signal is one channel for one wave, a digital multiplexing will be described in the following explanation.

There is the device of, for example, a multiple channel with eight slots for a frame of one carrier as this channel select type. In TDMA (time division multiplexing access), this means that the data for eight time slots is transmitted every one frame.

This frame is multiplexed by the frame control signal and the time-division method for the user. The radio repeater device of the channel select type is decided, operated, managed and set by each operator according to use frequency in the specified channel allocated by each operator of both of up-link and down-link.

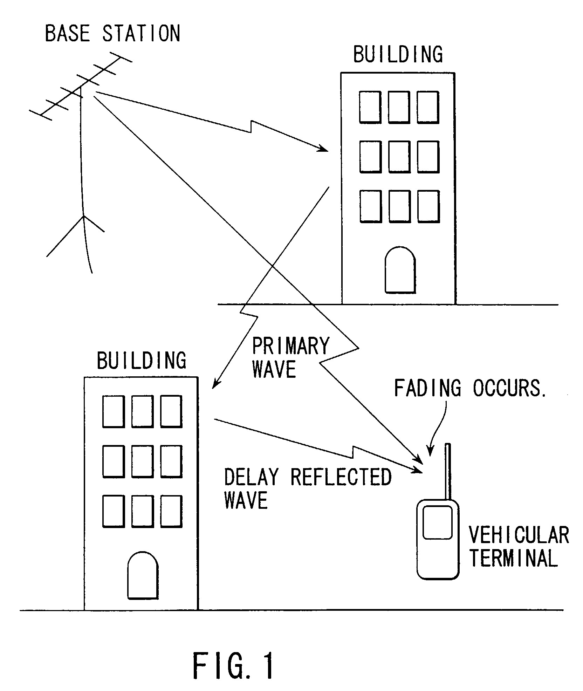

The radio base station is basically fixed, and a portable terminal is used while always moving. Therefore, the use circumstance of a portable terminal is variously as the car, the railway, and walk and will be controlled by the environment in the surrounding. A portable terminal includes the human body effect as a magnetic body, and the electric wave environmental circumstance changes hour by hour in the relation of using in the movement. Therefore, a plain communication with a portable terminal can be performed in the region without the obstacle, but a plain communication cannot be performed when there are a city and various obstacles, etc. For example, as shown in FIG. 1, the carrier from the base station has the primary wave input directly to a portable terminal and the delay reflected wave input to a portable terminal after the reflection is received by the building. Since these phases of primary wave and the delay reflected wave are different, the multipath fading is caused and the intensity of the reception signal will be decreased. As a result, the case where the carrier is not normally received in a portable terminal is caused.

That is, the carrier from the base station is delayed by the reflections such as buildings and obstacles when there are a city and various obstacles, and there is a case of occurrence of the interference, that is, multipath fading between carriers which is not reflected by the obstacle etc. As a result, the communication quality is degraded or communicating might become impossible.

As described above, conventionally, there is a disadvantage of degradation of communication quality by occurrence of the interference between the carrier from the base station and reflected carriers by the reflection with the obstacle in the building etc.

An object of the present invention is to provide a diversity device to which the communication quality of a portable terminal is not degraded and the antenna in a very bad environment where interference is occurred between original carriers.

The present invention adopts the following means to solve the above-mentioned problem.

The diversity device, in which transmitting and receiving carriers of at least two channels are possible, according to the present invention is characterized comprising: a diversity antenna having a first antenna which can be transmitted and received with at least first and second channels, a second antenna which can be transmitted and received with at least third and fourth channels, and at least two receive only third antennas; a diver unit which converts a carrier received with the diversity antenna into a predetermined reception signal; and a converter which converts the carrier for transmitting and receiving of the first and the second antennas into a carrier of a channel which can be mutually used with another antenna. It is desirable that the first and the second channels and the third and the fourth channels are channels having different frequency bands, respectively, and/or the first antenna performs transmission and reception to/from a base station, and the second antenna performs transmission and reception to/from a blind zone.

The diversity antenna, in which transmitting and receiving carriers of at least two channels are possible, according to the present invention is characterized comprising: a first antenna for standard which can transmit and receive at least a first carrier; a second antenna which can transmit and receive a second carrier having a different frequency from the first carrier; and a receive only third antenna. Here, the first antenna performs transmission and reception to/from a base station, and the second antenna performs transmission and reception to/from a blind zone.

Another diversity device according to the present invention is characterized by comprising: a plurality of antennas which receive a carrier; a first converter which converts a frequency of the carrier received with the plurality of antennas into a first intermediate frequency; a second converter which converts the carrier of the first intermediate frequency converted with the first converter to a second intermediate frequency lower than the first intermediate frequency; a ramp signal generator which generates a ramp signal based on the second intermediate frequency; and a selector which selects an antenna with a little interference with the carrier based on the first intermediate frequency and the ramp signal.

With the above-mentioned configurations, the preferred manners are as follows.
(1) A standard signal generator which generates a standard signal based on the second intermediate frequency is further provided.
(2) A synthetic signal of the first intermediate frequency and the ramp signal is sampled at predetermined sample interval, and an interference time of the carrier is output based on a sampling result.
(3) The diversity device synchronizes with a frame rate.
(4) The antennas has a space diversity device, a polarization diversity device, and a frequency diversity device or combination thereof.
(5) The second intermediate frequency is a relay frequency.

With above-mentioned configuration, it is possible to provide a diversity device which enable to communication without degrading the communication quality even in the region with a lot of interferences in the fading area, and is possible to easily install it even when the communication trouble because of an environmental change comes to occur.

As described above, according to the present invention, it is possible to provide a diversity device in which interference in the fading area is reduced and the communication of the high quality becomes possible.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a figure to explain the conventional problem;
FIG. 2 is a figure which shows an outline configuration of the diversity device according to the embodiment of the present invention;
FIG. 3A and FIG. 3B are figures which show details of diversity antenna 21;
FIG. 4 is a figure which shows an example of the reception circuit of each antenna;
FIG. 5 is a figure which shows another circuit example to obtain AA signal and BB signal;
FIG. 6A to FIG. 6C are figures which show the example of the processing circuit of signal shown in FIG. 5;
FIG. 7 is a figure which shows the modification of the circuit of FIG. 6A to FIG. 6C;
FIG. 8 is a figure which shows the modification of the circuit of FIG. 5;
FIG. 9A and FIG. 9B are figures which show the example of the processing circuit which outputs signal output from circuit of FIG. 8 as basic signal;
FIG. 10 is a figure which shows an example of the processing circuit of intermediate frequency signal from antenna; and
FIG. 11 is a figure which shows a configuration example of CPU.

The embodiment of the present invention will be explained referring to the drawing. The feature of the present invention is to provide a diversity device which enables to communicate in the fading area in which the carrier from the base station reaches a portable terminal indirectly (reflect to the obstacle such as buildings) and blind zone (hereafter, described as only "fading area").

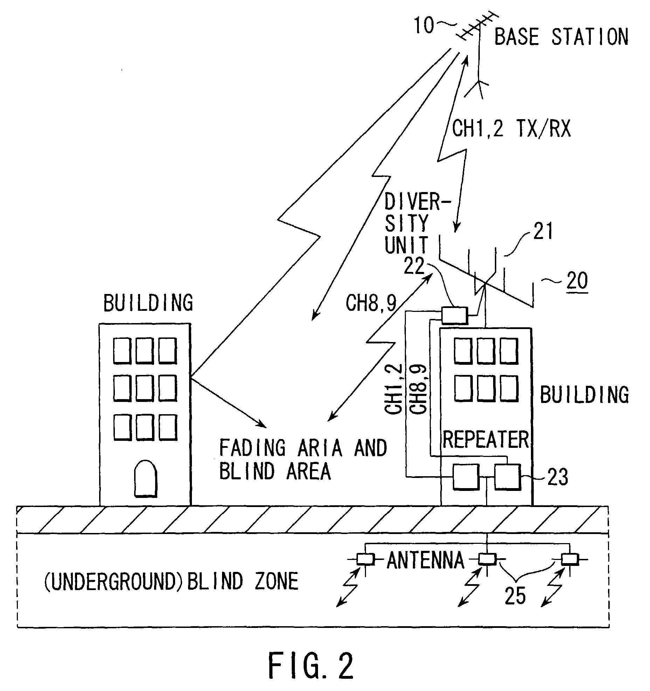

FIG. 2 is a figure which shows an outline configuration of diversity device according to the embodiment of the present invention. In FIG. 2, the carrier from the base station 10 is input to diversity device 20 described later in detail. This diversity device 20 performs the role of the radio repeater device, and the communication of a portable terminal in the above-mentioned fading area is enabled. In the area where the carrier does not directly of indirectly reach a portable terminal such as blind zone in underground, a conventional radio repeater device may be used, and the diversity device according to the present invention may be used.

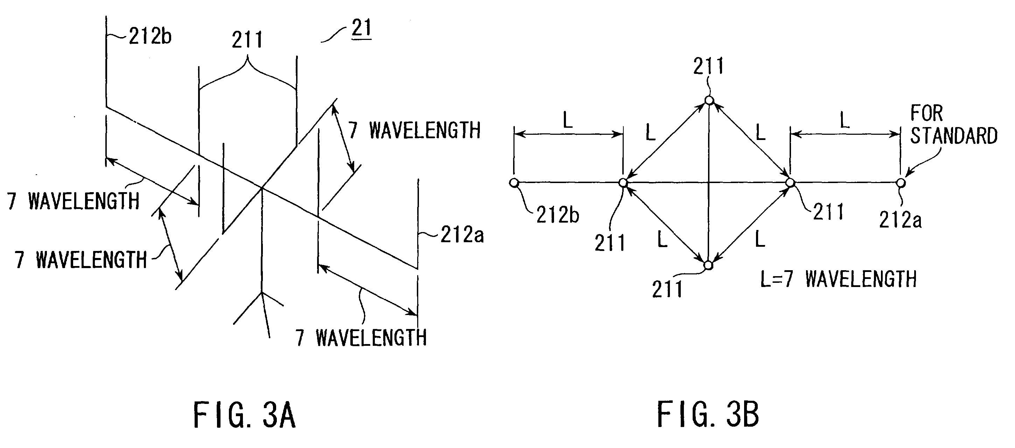

In FIG. 2, the diversity device has diversity antenna 21 shown in FIG. 3A and FIG. 3B, diversity unit 22, and repeater 23, for example. In FIG. 3A and FIG. 3B, FIG. 3A is a perspective view of the antenna, and FIG. 3B is a figure which sees the antenna of FIG. 3A from thereabove. Antenna 25 for the radio repeater is shown for an underground blind zone. In the following explanations, there are nine channels (here, nine frequency band regions) as the number of channels which can be used, and the base station 10 is assumed to be transmitting the carrier of channel 1 and channel 2.

Diversity antenna 21 transmits and receives the carrier with a portable terminal in the fading aria and the base station. In this embodiment, when taking the space diversity antenna as an example of diversity antenna 21, diversity antenna 21 has a plurality (4, for example) of antennas arranged at the position of several times wavelength of the wavelength of the carrier (Here, seven times wavelength). In FIG. 2, four reception antennas 211 are prepared for examples for the space diversity device, and the carrier of receive only is input. Two transmission and reception antennas 212, which transmit and receive the carrier, are prepared, and the first transmission and reception antenna 212a is used to transmit and receive the carrier with base station 10 as a standard antenna. The second transmission and reception antenna 212b is used to transmit and receive the carrier with a portable terminal in said fading area. Hereafter, though the space diversity antenna will be explained as diversity antenna 211 as an example, it is not limited to this. For example, of course, the frequency diversity antenna and the polarization diversity antenna may be used.

Diversity unit 22 amplifies the carrier received with space diversity antenna 211, and performs processing of inputting only the output of predetermined space diversity antenna 211 selectively by switching the input from the space diversity antenna 211 or synthesizing the input from the space diversity antenna 211. For example, the output of each channel is sent to repeater 23.

Repeater 23 is covered all bands of the setting frequency which can be used domestically for example, and operates as follows. When the carrier from the base station is channel 1 and channel 2, Repeater 23 converts the carrier into a frequency band region different from the carrier from the base station, for example, channel 8 and channel 9, and outputs it to diversity unit 22. Diversity unit 22 emits this input carrier from second transmission and reception antenna 212b.

By the above-mentioned operation, in the fading area, even if it is an environment in which the carrier from the base station 10 interferes with the reflected wave, for example, since the use channel to a portable terminal changes in the fading area according to this diversity device, an operation such that the base station changes only in the fading area can be performed. In addition, an extremely excellent communication without the fading in the fading area becomes possible since interference with the carrier from the base station 10 is not occurred.

Another embodiment to decrease the fading in the fading area will be described. Here, the reception frequency is described as 1800 MHz.

In this explanation, it is assumed to use the antenna shown in FIG. 3A and FIG. 3B.

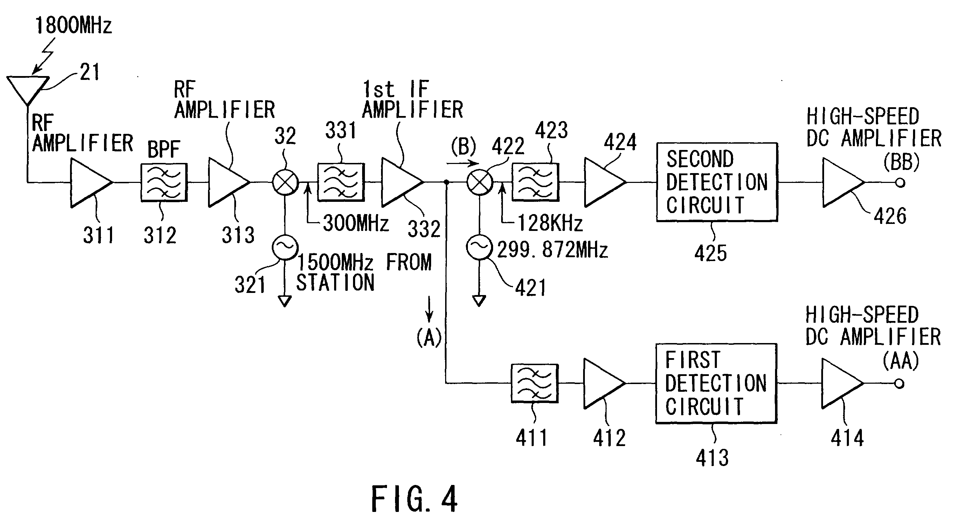

FIG. 4 is a figure which shows an example of reception circuit of each antenna. First, reception circuit of space diversity antenna 211 and second transmission and reception antenna 212b will be explained.

The carrier of 1800 MHz received with each above-mentioned antenna 21 is amplified first by the predetermined gain with the first high frequency amplifier 311, and next the carrier with the frequency of the predetermined band passes the first band-pass filter 312. This first band-pass filter 312 filters only the received carrier. Then, the carrier is amplified with the second high frequency amplifier 313, and is converted into an intermediate frequency once. Conversion into this intermediate frequency is performed by synthesizing the frequency of 1800 MHz for example by local oscillation 321 of 1500 MHz with frequency of 300 MHz and mixer 32. After only the carrier with an intermediate frequency of the desired band passes the second band-pass filter 331, the carrier is amplified with the first intermediate frequency amplifier 332, passes the route of (A), and is sent to the first detection circuit 413 of the next stage through second intermediate frequency amplifier 412 and the third band-pass filter 411. The carrier is amplified with high-speed DC amplifier 414 and is output. The first detection circuit 413 performs the envelope single direction detection, and integral time constant after detection is assumed to be 1800 × 10⁻⁶ or less. In the first detection circuit 413, the power value for seven wavelength is made DC. This output is assumed to be AA signal.

On the other hand, the explanation will be omitted since the output from the first transmission and reception antenna 212a is similar to the above-mentioned operation until being converted into an intermediate frequency of 300 MHz, and being sent to the second detection circuit 423 of the next stage. The carrier amplified with the first intermediate frequency amplifier 332 is further frequency-converted with local oscillation 421 and mixer 422 by the route of (B), for example, converted into 128 kHz by a local oscillation here. This signal is band-limited, amplified, thereafter, envelope-detected, and input to the high-speed waveform shaping circuit of the next stage, and the ramp signal generation circuit. Since the envelope detection time constant is constant, the ramp cycle and the integration inclination angle of the ramp signal of 128 kHz change due to the error of the phase when this standard antenna receives interference. This signal is assumed to be BB signal. Five AA signals and BB signals are connected with a high-speed comparator. Then, the antenna select signal is output by CPU through the predetermined processing described later.

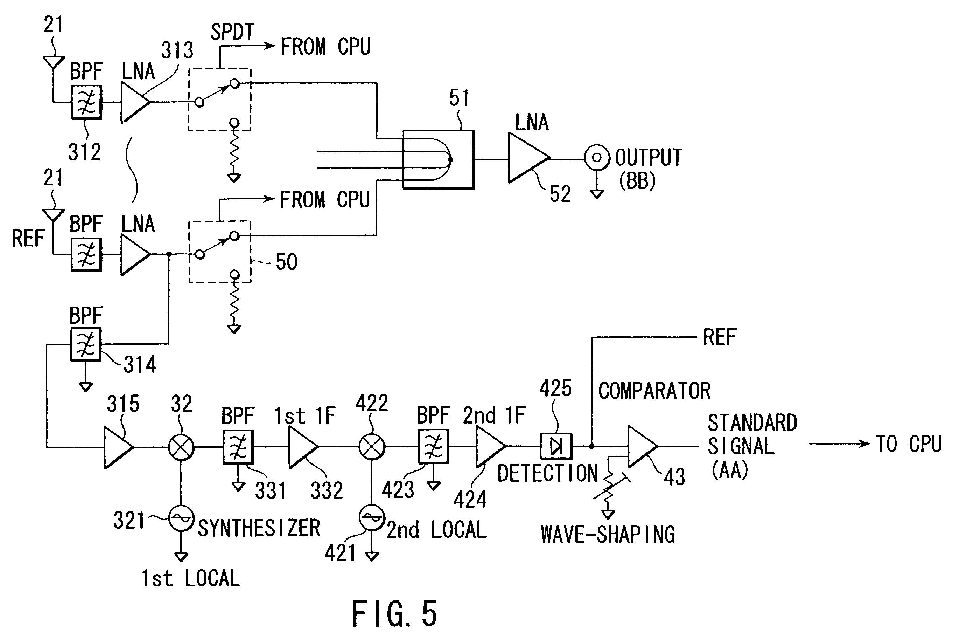

FIG. 5 is a figure which shows another example of circuit to obtain AA signal and BB signal. In FIG. 5, the same mark is fixed to the part where the same operation is basically performed as the circuit of FIG. 4, and the repetition explanation will be omitted.

The carrier input to each antenna 21 passes first filter 312 in which the frequency only of the predetermined band passes, and thereafter amplified with amplifier 313. The amplified carrier branches into the output line of the BB signal and the output line of the AA signal as well as FIG. 4.

The carrier input to the output line of the BB signal is synthesized with the signal input from switching circuit 50 with synthetic machine 51 through switching circuit 50, amplified with amplifier 52, and output as BB signal. The detection circuit is not shown in FIG. 4, but of course envelope detection is included if necessary. On the other hand, the AA signal is processed as follows as well as FIG. 4 and output. First, AA signal is converted into 300 MHz for example by local oscillations of the first stage, converted into an intermediate frequency of 128 kHz for example by the next stage, the envelope detection is performed, and the AA signal is output with the comparator as AA signal.

The above-mentioned ramp signal of 128 kHz is converted into the relay band. In addition, here, antenna which is received interference, that is, the antenna with the lowest level caused by interference is selected as AA signal. Since the AA signal becomes the sum total value of the phase integration with the interference wave for seven wavelength, the DC value of the antenna with a lot of interferences after the detection, that is, the level of the AA signal is low. As a result, the level judgment is performed by the comparator. This signal is a signal which expresses the position on the time axis to have received the interference with the carrier by the pulse width.

Then, the antenna signal which does not synchronize with the pulse width on this time axis in antennas other than the antenna which has received the interference with the carrier and the antenna signal with a little influence are selected. The signal without interference of this carrier as a basic blanking sample gate signal and as an antenna select signal synchronizing with the pulse width of this signal, can be used as a diversity device if the antenna is switched with a high-speed antenna switch. The switch speed of this antenna is obtained by the comparison arithmetic of the ramp signal and five antennas, and the output pulse of the comparator at start of the ramp becomes the ultra-high-speed. CPU described later in detail selects the antenna based on this comparator output pulse.

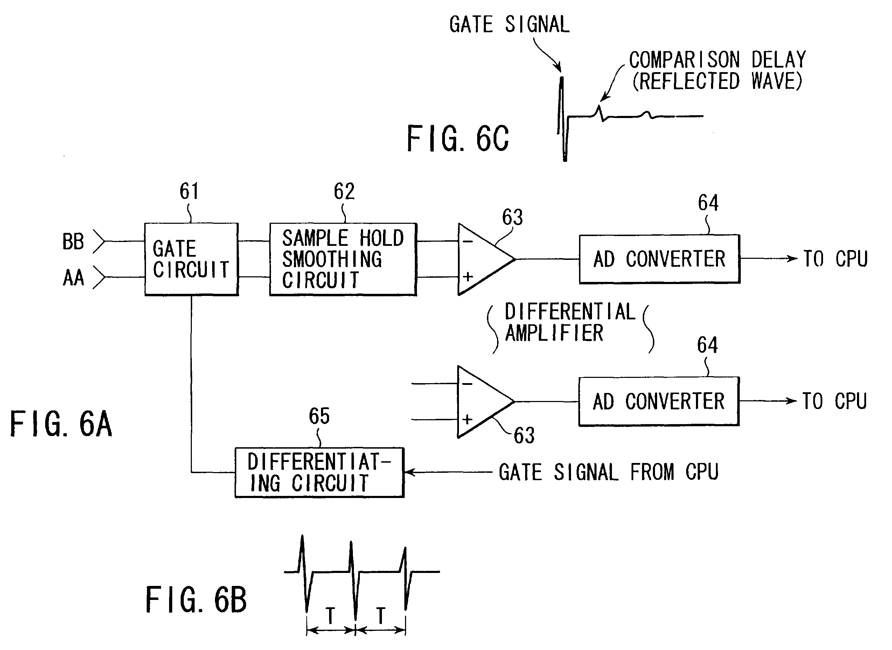

The timing of sampling is set to two kinds of analog detection signals (signal BB from each antenna and standard signal AA) in FIG. 5 with gate circuit 61 as shown in FIG. 6A. Then, two kinds of analog detection signals are sampled by sample hold smoothing circuit 62 at predetermined time period, and the comparison result is output by differential amplifier 63. This output indicates time to receive interference, and has the waveform shown in FIG. 6C for example. And, the output is input to A/D converter 64, and converted into digital data. The signal converted into digital data is input to CPU described later in detail, and the predetermined processing is performed. This operation is performed to each antenna 21 in parallel. The gate signal from CPU is input to differential circuit 65, becomes the waveform shown in FIG. 6B for example, and input to above-mentioned gate circuit 61 which consists of, for example, the transistor.

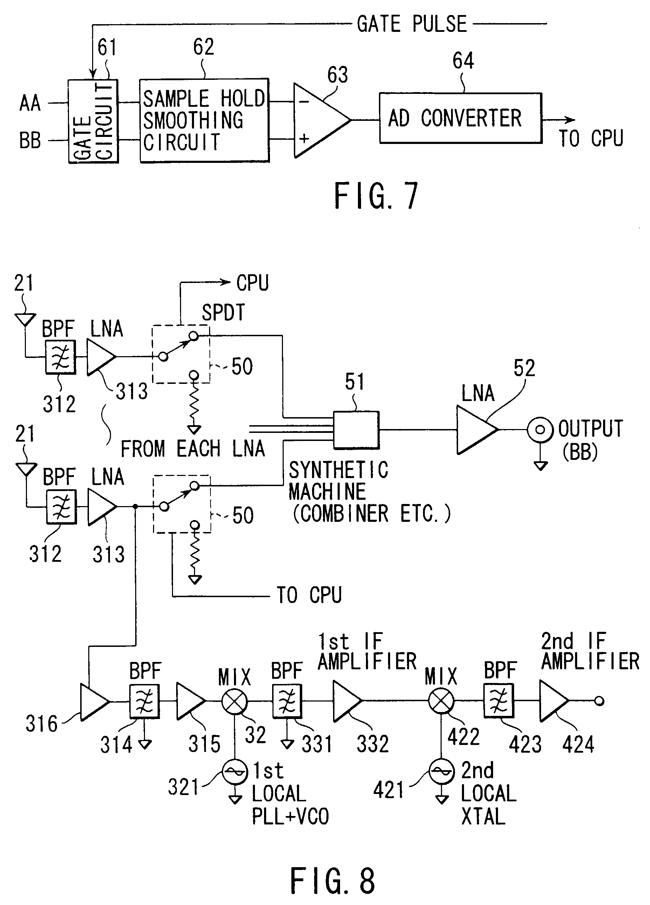

FIG. 7 is a figure which shows the modification of the circuit of FIG. 6A. Though the circuit configuration is almost similar to FIG. 6A in FIG. 7, the point of inputting the signal of an intermediate frequency not to input the signal after detection as an input signal is different. In this case, it is necessary to be an intermediate frequency of 200 kHz for example not a high frequency signal as the input signal. In FIG. 6A to FIG. 6C, the signal from CPU is differentiated and is used as the gate pulse, either of the signal from CPU or the ramp signal from the comparator is may used.

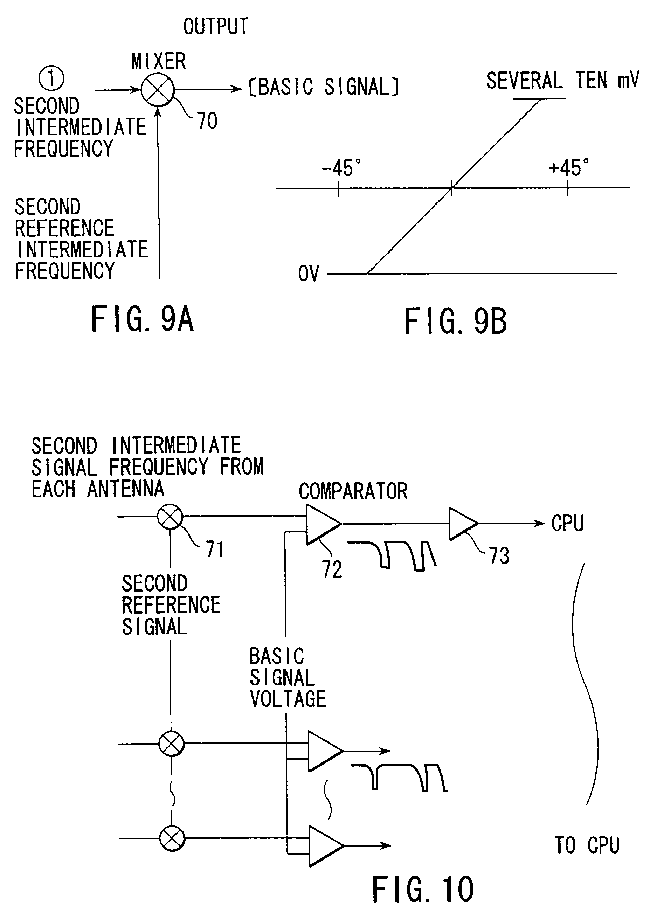

FIG. 8 is a figure which shows the modification of the circuit of FIG. 5. FIG. 8 shows the circuit of a previous stage of the envelope detection in FIG. 5, since only amplifier 316 is added, the explanation of this circuit will be omitted. FIG. 9A is a figure which shows an example of the processing circuit which outputs the signal output from circuit of FIG. 8 as basic signal. The signal output from the circuit of FIG. 8 is synthesized with standard signal and mixer 70 with the same frequency and output as a basic signal. This output becomes the DC voltage of the phase difference to the standard signal, and takes the value from 0 V to several tens mV as shown in FIG. 9B. Each output signal from each antenna is synthesized with standard signal and mixer 71 as shown in FIG. 10, the result of comparing the outputs with basic signal and comparator 72 is amplified with amplifier 73, and is output to CPU.

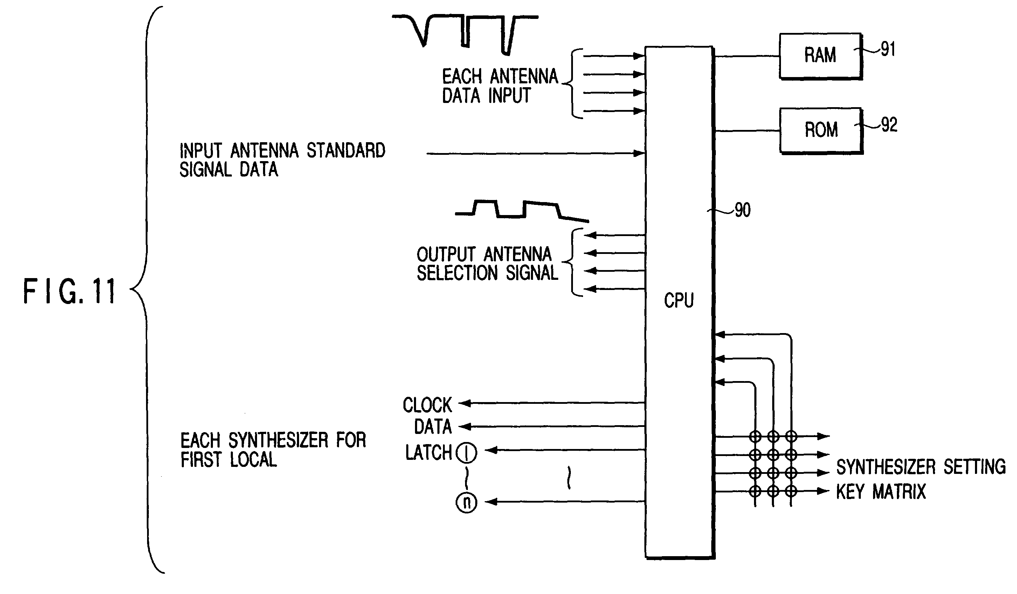

CPU controls the selection of the antenna etc. by the I/O shown in FIG. 11 for example. CPU 90 has RAM 91 (random-access memory) and ROM (read-only memory) 92 etc. as a supplementary memory for the operation. CPU 90 inputs data from each antenna and the standard signal of the antenna for example, performs the predetermined processing, and outputs the antenna select signal. CPU 90 has the function to output the clock signal etc. naturally for a local oscillation of each synthesizer.

The above-mentioned antenna switch diversity device performs the role of the repeater device shown in FIG. 2 in the present invention. However, only single antenna switch diversity device can be used.

Repeater devices of the channel select type are usual one wave-eight slots type, but 1, 2, 4, and generally eight channels can be selected. It is assumed to set in four channels. The repeater device depends on the antenna power, but is assumed to cover the range of 100 m. The region, in which this repeater device covers, is assumed to be in the fading area. The two base stations exist in this circumference, and these base stations are assumed to be A base station and B base station. The plurality of base stations (in this case, A base station and B base station) monitor one portable terminal, and performs the switch of A base station and B base station to a portable terminal by the movement circumstance by control signal BER rate from a portable terminal and the RSSI level on the base station side. Actually, it is switched to stronger one of the RF level in about ten seconds.

In the fading area, the setting of the repeater device can emit a high level of the antenna power as at least 3 db or more in the service area.

The setting of the channel is set in two channels. This object is to set the same frame in two channels, and operate the diversity device for the fading area as a frequency diversity device (frequency transmission according to two channels). Here, the base band bit rate of a portable terminal is various. Here, it is assumed that one slot is 32 kbps in one direction (both of up-link and down-link may be acceptable). The frame bit rate becomes 256 kbps (frequency conversion 128 kHz). These are 7.8 microseconds in the electricity length.

In this case, the interference position from the antenna is 2343.75 m. Interference is usually occurred if there is an obstacle or a movement material (wave, aircraft, and car, etc.) in this interference position. The building as the obstacle can be built at this trouble position after constructing the base station, and the interference did not exist when the base station was constructed as described above, but the circumstance that comes to generate a lot of interference waves in the surrounding can be solved in the present invention.

Said ramp basic signal is synchronized with this frame rate with the standard antenna reception device. That is, the diversity device according to the present invention synchronizes with the frame rate, and can be applied to the standard reception device used for the diversity device. The space diversity device, the horizontal and vertical polarization diversity device, and the frequency diversity device is selected as the antenna according to the installation environment. The diversity device according to the present invention performs the role as the repeater device as apparent from the above-mentioned explanation.

In the present invention, the feature of the device is especially as follows in the antenna switch diversity device.

First, since the device processes a high-speed signal which can find time that interference is occurred for the standard ramp signal as an antenna switching signal, interference in the standard ramp signal can be found. The current digital communication system is made a packet and the maximum delay value which includes the base band and cable is made in the delay of 27 msec or less from the relation of the echo. Therefore, by applying the present invention, since it becomes possible to judge whether a possible region or an impossible region of error correction in the packet and antenna switches at from several-time to hundreds of times in one clock of the reception data by switching antennas with high-speed switching, basic data never breaks. Especially, the present invention has a very large advantage in the CDMA system (code division multiple access system) in which it is interference and a Doppler effect become the disadvantage in the currently.

Though in this embodiment, a case of six antennas is shown in the space diversity device, the diversity antenna can be made to a multi ream, and be diversified according to the amount of the handling data or the number of channels etc. Specifically, the number of antennas is increased according to increase of the number of channels. The arrangement of the antenna in not limited the shape shown in FIG. 3A and FIG. 3B, and any arrangement method may be possible if a valid transmitting and receiving the carrier is possible. It is also possible to install the plurality of repeater devices if necessary. Though the embodiment which uses one kind of antenna is shown as the diversity device as described above, interference in the fading area may be reduced by combining and using each antenna of frequency diversity device, space diversity device and polarization diversity device.

The present invention is not limited to the above-mentioned embodiments, it is possible to execute by transforming them within the scope of the present invention.

## Claims

1. A diversity device characterized by comprising:
a diversity antenna (21) having a first antenna (212a) which can be transmitted and received with at least first and second channels, a second antenna (212b) which can be transmitted and received with at least third and fourth channels, and at least two receive only third antennas;
a diver unit (22) which converts a carrier received with said diversity antenna into a predetermined reception signal; and
a converter (23) which converts the carrier for transmitting and receiving of said first and said second antennas into a carrier of a channel which can be mutually used with another antenna.

2. The diversity device according to claim 1, characterized in that said first and said second channels and said third and said fourth channels are channels having different frequency bands, respectively.

3. The diversity device according to claim 1, characterized in that said first antenna performs transmission and reception to/from a base station, and said second antenna performs transmission and reception to/from a blind zone.

4. A diversity antenna, in which transmitting and receiving carriers of at least two channels are possible, characterized by comprising:
a first antenna (212a) for standard which can transmit and receive at least a first carrier;
a second antenna (212b) which can transmit and receive a second carrier having a different frequency from said first carrier; and
a receive only third antenna (211).

5. The diversity antenna according to claim 4, characterized in that said first antenna performs transmission and reception to/from a base station, and said second antenna performs transmission and reception to/from a blind zone.

6. A diversity device characterized by comprising:
a plurality of antennas (21) which receive a carrier;
a first converter (32) which converts a frequency of the carrier received with said plurality of antennas into a first intermediate frequency;
a second converter (422) which converts the carrier of said first intermediate frequency converted with said first converter to a second intermediate frequency lower than said first intermediate frequency;
a ramp signal generator which generates a ramp signal based on said second intermediate frequency; and
a selector (423-426) which selects an antenna with a little interference with the carrier based on said first intermediate frequency and said ramp signal.

7. The diversity device according to claim 6, characterized by further comprising a standard signal generator (411-414) which generates a standard signal based on said second intermediate frequency.

8. The diversity device according to claim 6, characterized in that a synthetic signal of said first intermediate frequency and said ramp signal is sampled at predetermined sample interval, and an interference time of the carrier is output based on a sampling result.

9. The diversity device according to claim 6, characterized in that said diversity device synchronizes with a frame rate.

10. The diversity device according to claim 6, characterized in that said antennas has a space diversity device, a polarization diversity device, and a frequency diversity device or combination thereof.

11. The diversity device according to claim 6, characterized in that said second intermediate frequency is a relay frequency.
